(19) Europäisches Patentamt / European Patent Office / Office européen des brevets

(11) **EP 4 764 438 A1**

(12) **DEMANDE DE BREVET EUROPEEN**

(43) Date de publication:
    **24.06.2026  Bulletin 2026/26**

(21) Numéro de dépôt: **25221478.8**

(22) Date de dépôt: **08.12.2025**

(51) Classification Internationale des Brevets (IPC):
    **G01L 5/102** (2020.01)    **G01M 13/023** (2019.01)

(52) Classification Coopérative des Brevets (CPC):
    **G01L 5/102; G01M 13/023**

(84) Etats contractants désignés:
    **AL AT BE BG CH CY CZ DE DK EE ES FI FR GB
    GR HR HU IE IS IT LI LT LU LV MC ME MK MT NL
    NO PL PT RO RS SE SI SK SM TR**
    Etats d'extension désignés:
    **BA**
    Etats de validation désignés:
    **GE KH LA MA MD TN**

(30) Priorité: **17.12.2024  FR 2414357**

(71) Demandeur: **Commissariat à l'Energie Atomique
    et aux Energies
    Alternatives
    75015 Paris (FR)**

(72) Inventeur: **PIERROT, Jean Benoît
    38054 Grenoble Cedex 09 (FR)**

(74) Mandataire: **Hautier IP
    20, rue de la Liberté
    06000 Nice (FR)**

(54) **COURROIE DE TRANSMISSION DE COUPLE**

(57) L'invention concerne le domaine du génie mécanique et plus particulièrement des courroies de transmission de couple utilisées dans les machines pour transmettre la force motrice entre les poulies motrice et réceptrice.

L'invention concerne plus particulièrement une courroie de transmission 1 de couple comprenant :
• Une armature de traction 11 et
• un volume de contact 12 destiné à être en contact avec une poulie motrice et au moins une poulie réceptrice, et
• au moins un capteur 13 intégré dans la courroie,
telle que le capteur est un capteur de tension comprenant un profilé 131, de préférence métallique, ancré sur l'armature de traction, compris au moins en partie dans le volume de contact et configuré pour se déformer sous l'action des forces longitudinales 100 appliquées à la courroie en fonctionnement, de sorte à mesurer les tensions longitudinales dans la courroie.

FIG. 3

## Description

### DOMAINE TECHNIQUE

La présente invention concerne le domaine du génie mécanique et plus particulièrement des courroies de transmission de couple utilisées dans les machines pour transmettre la force motrice entre les poulies motrice et réceptrices.

### ETAT DE LA TECHNIQUE

Le principe de fonctionnement des courroies repose sur deux éléments principaux :

a. une surface ou volume de contact, dont l'importance est fonction de son coefficient de frottement, permettant de prélever le couple de la poulie motrice, de le transmettre à l'armature de traction et, ensuite, de le restituer aux poulies réceptrices de la transmission ; et

b. une armature, capable de transformer l'effort tangentiel prélevé sur la poulie motrice en un effort longitudinal de traction entre les poulies.

Dans le domaine des courroies de transmission de couple, il est souhaitable de suivre le vieillissement de la courroie de transmission ; or les forces de tension/compression appliquées à la courroie sont un paramètre important du vieillissement. Il y a des tentatives de modèles mathématiques pour caractériser le vieillissement, mais ils ne fournissent que des approximations. Il y a un besoin pour caractériser les forces, avec une précision accrue, besoins auquel la présente invention apporte une réponse.

### RESUME

Pour atteindre cet objectif, selon un mode de réalisation, on prévoit une courroie de transmission de couple comprenant :

a. une armature de traction et

b. un volume de contact destiné à être en contact avec une poulie motrice et au moins une poulie réceptrice, et

c. au moins un capteur intégré dans la courroie de transmission,

la courroie de transmission est essentiellement telle que ledit au moins un capteur est un capteur de tension comprenant un profilé, de préférence métallique, ancré sur l'armature de traction, compris au moins en partie dans le volume de contact et configuré pour se déformer sous l'action des forces longitudinales appliquées à la courroie de transmission en fonctionnement, de sorte à mesurer les tensions longitudinales dans la courroie de transmission.

La présente invention concerne également une machine comprenant une poulie motrice, au moins une poulie réceptrice et une ou plusieurs courroies de transmission de couple telle qu'introduite ci-dessus.

On réalise ainsi des mesures in-situ pour le suivi du vieillissement de la courroie de transmission. Les paramètres qui participent à la caractérisation de celui-ci sont avantageusement liés aux dynamiques temporelles de la température et des forces longitudinales appliquées aux matériaux des composants de la courroie. L'on peut ainsi, sur la base des mesures réalisées, évaluer le vieillissement de la courroie.

### BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :

La figure 1 représente schématiquement une vue en coupe longitudinale d'une machine selon un mode de réalisation de l'invention.

La figure 2 représente, en coupe longitudinale, un schéma de principe de la présente invention.

La figure 3 représente un schéma du principe d'intégration et du capteur de tension selon un mode de réalisation de l'invention ; à gauche en coupe transversale et à droite en portion de coupe longitudinale.

La figure 4 représente une vue partielle en coupe longitudinale de la courroie selon un mode de réalisation de l'invention.

Les figures 5A à 5E représentent des vues partielles en coupe longitudinale de la courroie selon un mode de réalisation de l'invention dans plusieurs configurations de déformation en fonction des sollicitations : A) aucune force, B) extension, C) compression, D) passage sur poulie réceptrice , E) passage par poulie presseuse,; Déformation courroie (flèches horizontales), Déformation capteur (flèches verticales).

La figure 6 représente différentes vues d'exemples de géométries possibles pour le profilé du capteur de tension.

La figure 7 représente schématiquement la déformation s sur passage de poulie du capteur de tension de la courroie selon un mode de réalisation de l'invention.

La figure 8 représente schématiquement un exemple de protection du capteur de tension selon un mode de réalisation de l'invention par un boitier.

La figure 9A représente schématiquement un exemple de liaison entre l'armature et le capteur de tension selon un mode de réalisation de l'invention par réseau de cavités bloque-fils.

La figure 9B représente schématiquement un autre exemple de liaison entre l'armature et le capteur de tension selon un mode de réalisation de l'invention par rivetage.

La figure 10 représente un schéma fonctionnel d'un capteur de tension selon un mode de réalisation de l'invention.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

## DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement :
Selon un exemple, le volume de surface est à base de caoutchouc, d'uréthane ou polyuréthane, de Nitrile ou de polychlorure de vinyle (PVC).

Selon un exemple, le capteur de tension comprend en outre au moins un transducteur configuré pour convertir la déformation du profilé en un signal électrique.

Selon un exemple, le profilé comprend une plaque, de préférence en acier, possédant des propriétés de mémoire de forme et suffisamment souple pour se déformer sous l'action des forces longitudinales appliquées à la courroie de transmission en fonctionnement. Cette configuration permet de réduire la transmission des contraintes de la courroie vers la partie sensible du capteur. Ainsi, le capteur est protégé de la détérioration et possède une meilleure robustesse sur la durée.

Selon les deux exemples précédents, ledit au moins un transducteur est disposé sur une des faces, de préférence sur chaque face, de la plaque d'acier.

Selon un exemple, le profilé présente une coupe longitudinale en forme de U dont les pattes sont recourbées vers l'intérieur. Le profilé peut être intégré longitudinalement dans la courroie de transmission

Selon un exemple, le profilé est caractérisé au moins par une longueur nominale $D$, une épaisseur e, et des pattes d'une hauteur $h$.

Selon l'exemple précédent, le rapport $e/2h$ est sensiblement compris entre 1/50 et 1/150, et par exemple sensiblement égal à 1/100.

Selon l'un des deux exemples précédents, les dimensions utiles $D$, e et $h$ du profilé sont déterminées en fonction :

a. d'une amplitude des forces longitudinales à mesurer, et/ou

b. d'une déformation maximale admissible de la courroie de transmission, et/ou

c. de l'élasticité du caoutchouc constituant le volume de contact, et/ou

d. des caractéristiques d'au moins un transducteur, et/ou

e. d'un diamètre minimum d'une poulie, et/ou

f. de caractéristiques d'élasticité du profilé.

Selon un exemple, l'ancrage du profilé mécanique sur l'armature de traction est réalisé par l'intermédiaire de portions recourbées du profilé.

Selon l'exemple, l'ancrage du profilé mécanique sur l'armature de traction comprend :

a. des griffes métalliques enfichées dans une nappe de fils de l'armature de traction ; ou

b. un réseau de cavités bloque-fils ; ou

c. au moins un rivet.

Selon un exemple, le capteur de tension est intégré dans un boîtier dont les dimensions sont liées aux limites de déformation maximale du profilé.

Selon l'exemple précédent, le capteur comprend en outre une jauge de température disposée sur le boitier de protection et/ou le boîtier est à base d'un matériau résistant aux contraintes de température et d'abrasion dans la courroie de transmission.

Selon un exemple, la courroie de transmission peut comprendre en outre un dispositif de conditionnement du signal électrique issu de chaque transducteur.

Selon l'exemple précédent, le dispositif de conditionnement comprend :

a. un pont de Wheatstone dont deux des branches sont les transducteurs placées sur les faces déformables de la lame et/ou une jauge de température disposée sur le boitier de protection, et

b. un convertisseur analogique-numérique, et/ou

la courroie de transmission peut comprendre en outre une antenne pour émettre vers un récepteur extérieur le signal issu du dispositif de conditionnement.

On entend par un paramètre « sensiblement égal/supérieur/inférieur à » une valeur donnée que ce paramètre est égal/supérieur/inférieur à la valeur donnée, à plus ou moins 20 %, voire 10 %, près de cette valeur. On entend par un paramètre « sensiblement compris entre » deux valeurs données que ce paramètre est au minimum égal à la plus petite valeur donnée, à plus ou moins 20 %, voire 10 %, près de cette valeur, et au maximum égal à la plus grande valeur donnée, à plus ou moins 20 %, voire 10 %, près de cette valeur.

Dans la présente demande de brevet, l'épaisseur d'une lame est prise selon une direction normale au plan d'extension principal de la lame.

On entend par un profilé, une lame ou un volume de contact, « à base » d'un matériau A, un profilé, une lame ou un volume de contact comprenant ce matériau A uniquement ou ce matériau A et éventuellement d'autres matériaux, par exemple des éléments d'alliage.

Il est connu des documents de brevet référencés WO 2012/085338 A1, US 7,494,004 B2 et EP 3 919 775 A1 des intégrations de composants de type NFC/RFID dans des courroies de transmission de couple. Ces travaux se concentrent sur de la fonction d'identification ou une utilisation par un système extérieur à la courroie qui mesure des paramètres déductibles des propriétés de télécommunication ou du composant NFC/RFID (identification, vitesse, comptage de tours). Ces capteurs ne permettent pas de mesurer la tension dans la courroie.

D'autres travaux se positionnent sur de la fonctionnalisation des matériaux de la courroie (marques visibles, particules ferromagnétiques) et utilisent des procédés extérieurs (caméra, bobine magnétique) pour réaliser des mesures du même type que précédemment ou approchantes. Ces capteurs ne permettent pas non plus de mesurer la tension dans la courroie.

Un des objectifs de la présente invention est de pouvoir évaluer le vieillissement de la courroie de transmission.

Ce vieillissement est actuellement établi par expérimentation sur la base de plusieurs paramètres d'influence sur les matériaux de la courroie comme le couple, l'élévation en température, le nombre de tours, etc. Ils sont généralement instrumentés depuis l'extérieur de la courroie. Le vieillissement est ensuite évalué sur des paramètres d'élongation, d'état chimique des matériaux ou visuellement. L'analyse est faite *a posteriori* et nécessite, dans certains cas, un arrêt de fonctionnement. La fin de vie est décidée selon le scénario de l'expérimentation lorsque certains des critères ont atteint un seuil déterminé. Dans le cadre industriel, les couts de l'instrumentation et des analyses ne permettent pas de suivre tous les paramètres et la décision est effectuée selon un nombre d'heures d'utilisation soit avant usage complet soit après détérioration de la courroie ce qui entraine des couts de maintenance.

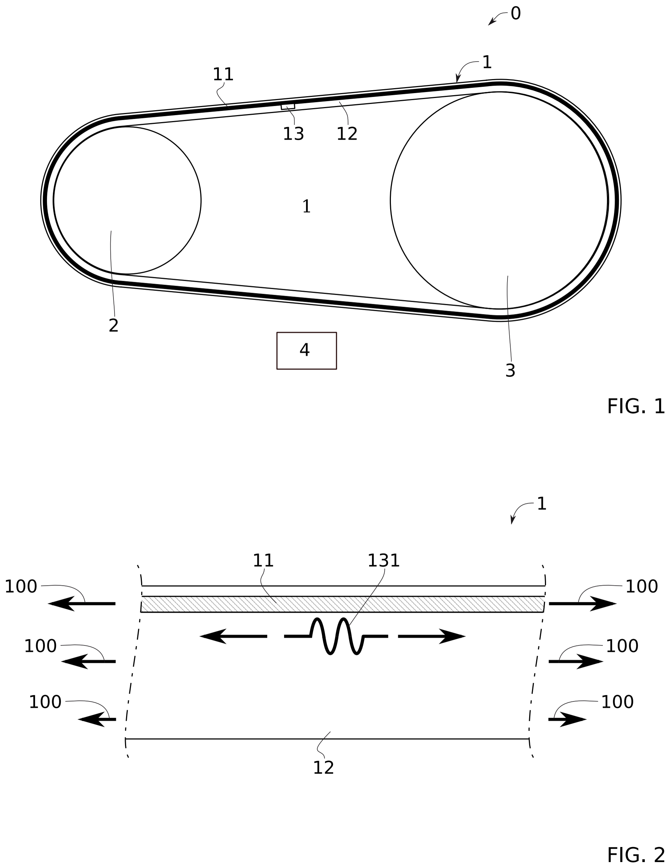

Selon un mode de réalisation de l'invention, et en référence à la figure 1, il est proposé une courroie de transmission 1 de couple comprenant :

  a. une armature de traction 11,
  b. un volume de contact 12 en caoutchouc destiné à être en contact avec une poulie motrice 2 et au moins une poulie réceptrice (3), et
  c. au moins un capteur 13 intégré dans la courroie de transmission 1.

La courroie est essentiellement telle que le capteur est un capteur de tension 13 comprenant un profilé 131, de préférence métallique, ancré sur l'armature de traction 11, compris au moins en partie dans le volume de contact 12 et configuré pour se déformer sous l'action de la des forces longitudinales 100 appliquées à la courroie de transmission 1 en fonctionnement, de sorte à mesurer les tensions longitudinales dans la courroie de transmission 1.

L'intégration d'un capteur de tension 13 dans la courroie 1 selon la présente invention se permet un enrichissement des paramètres suivis à moindre cout et permettre une meilleure optimalité des tâches de maintenance.

Une des mesures d'intérêt dans le cadre de la présente invention est liée aux forces, et en particulier les forces longitudinales 100, qui s'appliquent au cœur de la courroie 1 et qui dépendent principalement du couple à transmettre, mais aussi de certaines pertes dans la machine 0 (masse de la courroie, frottements) et de l'état des matériaux (caoutchouc, câble, élasticité, dégradations internes). Ces forces sont essentiellement transmises par l'armature de traction 11 et se propagent de proche en proche dans le matériau du volume de contact 12. Ces forces engendrent des déformations et une des tâches du capteur de tension 13 selon l'invention est d'assurer une bonne liaison avec les matériaux constituant la courroie 1 pour capter lesdites forces.

Le capteur de tension 13 est de préférence positionné en liaison ou suffisamment proche de l'armature de traction 11 afin que celle-ci lui transmette les forces longitudinales 100 qui s'appliquent lors du fonctionnement de la courroie de transmission 1. Du fait des forces longitudinales s'exerce sur le profilé 131, l'information de déformation est transmise mécaniquement dans le capteur de tension 13 jusqu'à une partie sensible ou transducteur 132 ou jauge de contrainte qui effectue la conversion de la déformation vers un signal électrique.

Sur la base de ce principe d'intégration, et en référence aux figures annexées, l'invention peut être mise en œuvre en faisant varier notamment :

  a. le type de liaison entre le capteur de tension 13 et l'armature de traction 11 et/ou le volume de contact 12 de la courroie de transmission 1, et/ou
  b. le type de transmission mécanique, et/ou
  c. le type de transducteur 132.

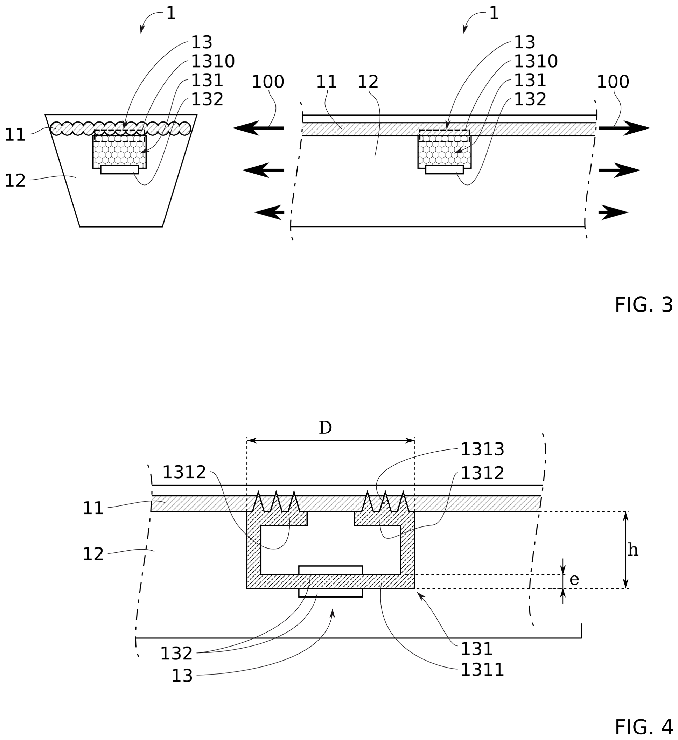

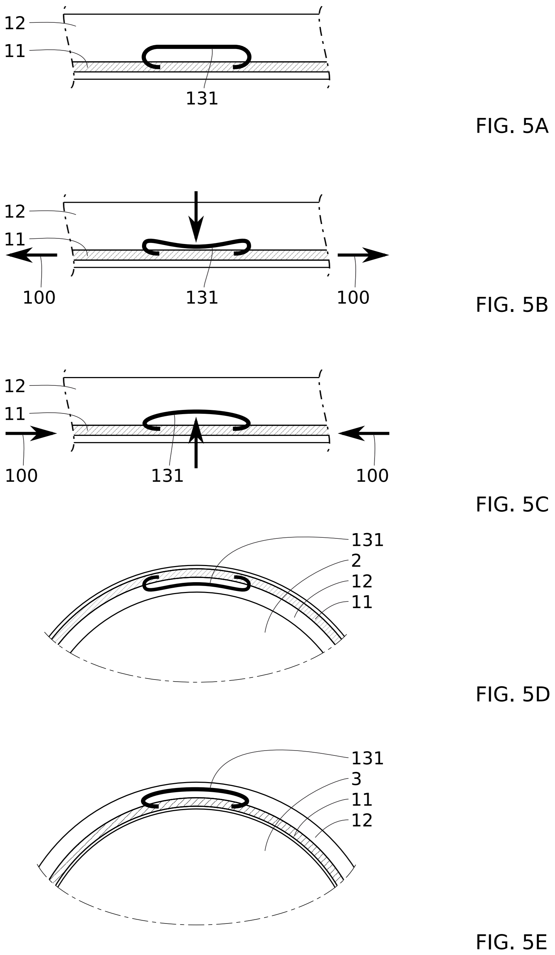

En référence aux figures 4 et 5, on peut s'appuyer sur une transmission mécanique par une lame métallique 1311 souple, par exemple une plaque d'acier comprise dans le profilé métallique 131 et possédant des propriétés de mémoire de forme comme dans le cas d'un ressort de façon à ce que celui-ci reprenne sa position lorsqu'aucune sollicitation ne lui est appliquée.

En référence à la figure 4, l'ancrage réalisant la liaison entre l'armature 11 et le capteur 13 se fait par l'intermédiaire d'au moins deux portions recourbées 1312 du profilé 131 et peut être sous la forme de griffes métalliques 1313 enfichées dans la nappe de fils ou, selon le cas, par d'autres options détaillées plus bas. La(es) jauge(s) de contrainte 132 sont de préférence disposées, et plus particulièrement collées, sur les surfaces de la lame métallique 1311. Le profilé métallique 131 possède par exemple des pattes d'une hauteur *h* et sa lame métallique 1311 présente une longueur nominale *D* et une épaisseur *e*.

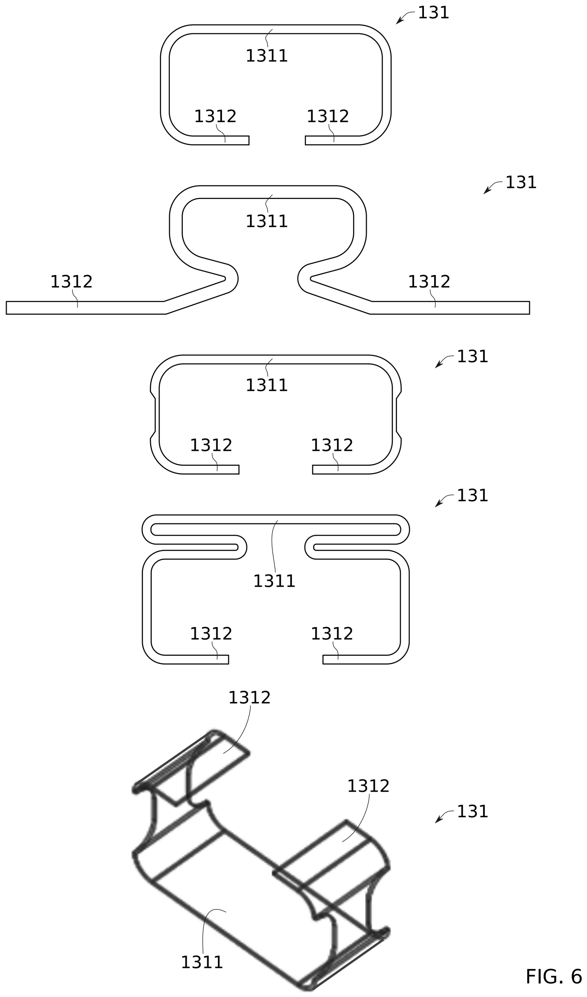

La forme du profilé métallique 131 peut avoir des variations de géométrie, comme illustré sur la figure 6, selon les besoins, mais reste dans le gabarit avec des dimensions utiles *D, h* et *e* ainsi que tous paramètres en découlant (*f(D, h, e)*).

En référence à la figure 5, la déformation du capteur de tension 13 est liée aux forces, et notamment aux forces longitudinales 100, appliquées à la courroie 1, et plus particulièrement à son armature 11, qui génèrent sa déformation. Le capteur 13 lié avec l'armature 11 se déforme en proportion d'un facteur inversement proportionnel à *e*/2*h* (hors élasticité du métal) et cette déformation est enregistrée par la(es) jauge(s) 132 placée(s) sur la(les) surface(s) de la lame métallique 1311.

Plus particulièrement, le rapport *e*/2*h* peut être sensiblement compris entre 1/50 et 1/150, et par exemple sensiblement égal à 1/100.

La mesure de déformation est de préférence réalisée dans la partie linéaire (hors poulies) de l'activité de la courroie 1. Pratiquement, la réalisation de cette partie du capteur 13 est faite en quelques étapes successives :

a. identification du facteur de proportion *e*/2*h* recherché en fonction de la déformation maximum de l'armature 11 et des caractéristiques de déformation des jauges 132 dimensions générales de la géométrie,
b. choix d'une forme géométrique sous contraintes de réalisation en fonction du matériau et d'intégration (packaging) , et
c. simulation du comportement de la machine 0 sous contraintes.

A l'issue de ces étapes, toutes formes géométriques telles que celles illustrées sur la figure 6, répondant aux critères de la machine 0, sont utilisables.

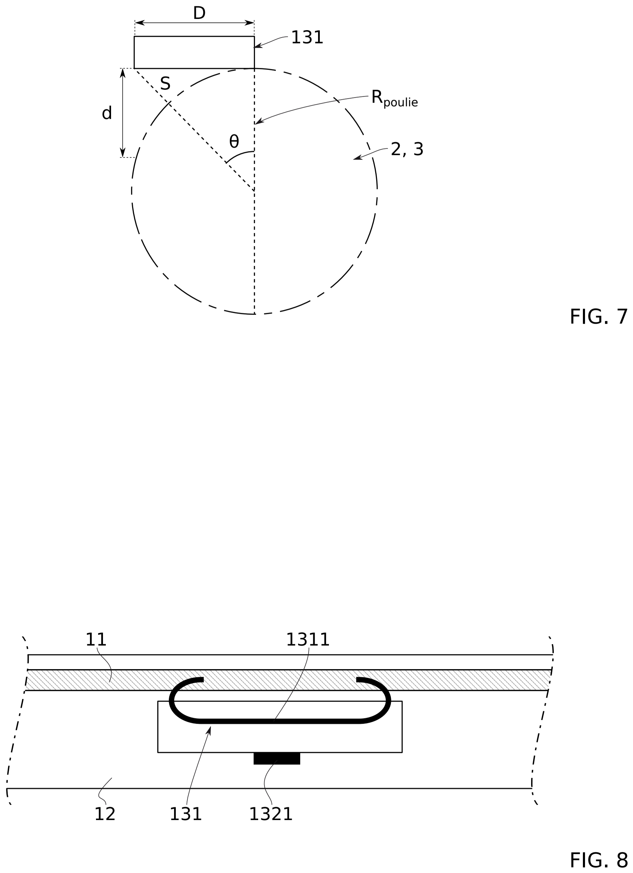

Lorsque la courroie 1 passe au niveau des poulies 2 et 3, aucune mesure de déformation n'est réalisée ou prise en compte, mais le capteur de tension 13 doit supporter la déformation appliquée à ce niveau. Celle-ci est déterminée, en référence à la figure 7, par calcul en fonction du rayon minimum des poulies 2 et 3 de l'application ( $s = \frac{D}{\sin(\theta)} - R_{poulie}$ ). Cette déformation est testée lors des simulations multiphysiques.

Comme illustré sur la figure 8, le capteur 13 peut être intégré au moins en partie dans un boitier de protection 133 dont les dimensions sont de préférence liées aux limites de déformation maximum du capteur 13 et dont la fonction est d'isoler sa partie sensible i.e. sa lame métallique 1311, du milieu de la courroie 1 fortement abrasif et contraignant. Le matériau du boitier 133 doit de préférence résister aux contraintes de températures, pression et d'abrasion du milieu et du processus de production.

La mesure obtenue par le transducteur 132 peut encore être conditionnée par un dispositif de conditionnement 134 comprenant par exemple, avant une conversion numérique par un convertisseur analogique numérique 1342, un pont de Wheatstone 1341 standard dont deux des branches sont les jauges de mesure 132 placées, selon le cas, sur les faces déformables de la lame métallique 1311 et/ou, dans un second cas, une jauge de température 1321 disposée sur le boitier de protection 133 de sorte à être uniquement influencée par la température et non la déformation. Ce schéma permet d'avoir une compensation de la mesure de l'influence de la température.

Comme déjà évoqué plus haut, plusieurs variantes de l'ancrage du capteur 13 sur l'armature 11 sont possibles selon les objectifs d'intégration. Ainsi, en alternative ou en complément aux griffes métalliques susmentionnées, la liaison entre l'armature métallique 11 de la courroie 1 et le capteur 31 peut être réalisée par :

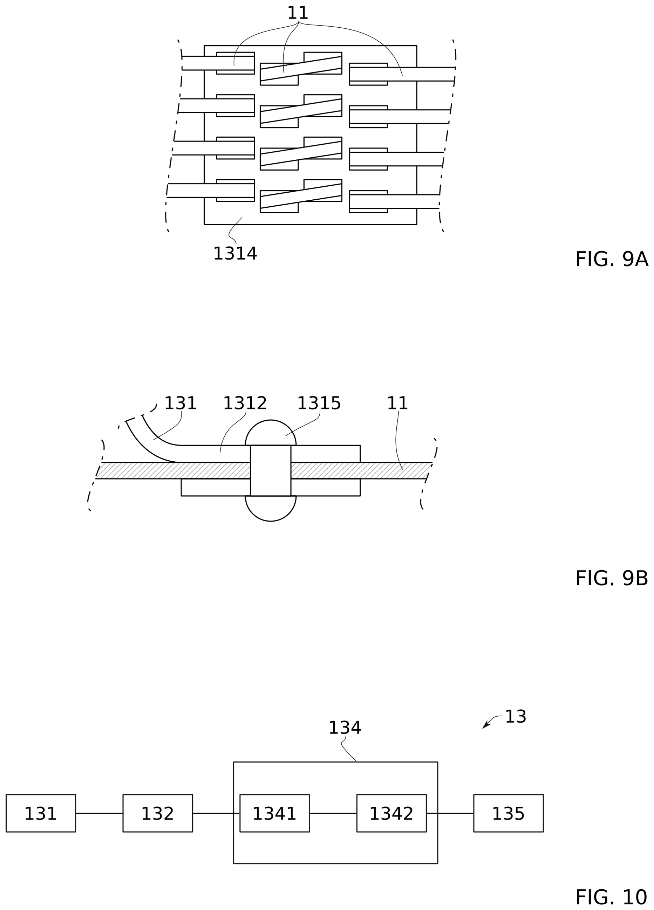

a. par un réseau de cavités bloque-fils 1314 comme illustré sur la figure 9A, par rivetage 1315 comme illustré sur la figure 9B ou encore par vissage.

Toujours selon les objectifs d'intégration, en ce qui concerne la transmission mécanique :

a. Le profilé métallique 131 souple peut être remplacé par un autre matériau souple, et/ou
b. Le profilé métallique 131 souple peut être à base d'un matériau permettant d'obtenir directement une information électrique en fonction du stress mécanique.

Également selon les objectifs d'intégration, en ce qui concerne le type de transducteur 132, il peut s'agir de :

a. une double jauge (face avant et arrière) pour une compensation en température et une meilleure précision, et/ou
b. une impression directe de la jauge de contrainte sur la lame métallique, et/ou
c. une addition d'une couche de matériau piézoélectrique sur les faces de la lame métallique 1311, et/ou
d. la présence d'une seule jauge de contrainte et d'un capteur thermique (thermistance) pour la correction de la mesure.

Avantageusement, la présente invention trouve à s'appliquer à toutes applications mécaniques réalisant la transmission de couple par courroie telles que :

a. les véhicules,
b. les machines industrielles, et
c. les convoyeurs.

Il est à noter que le capteur de tension 13 et son boitier ont des dimensions de l'ordre du cm³. Un capteur de tension 13 a par exemple les dimensions suivantes : 15 mm x 8 mm x 6 mm.

L'invention n'est pas limitée aux modes de réalisations précédemment décrits et s'étend à tous les modes de réalisation couverts par l'invention.

**Revendications**

1. Courroie de transmission (1) de couple comprenant :

   • Une armature de traction (11) et
   • un volume de contact (12) destiné à être en contact avec une poulie motrice (2) et au moins une poulie réceptrice (3), et
   • au moins un capteur (13) intégré dans la courroie de transmission (1),

   **caractérisé en ce que** ledit au moins un capteur (13) est un capteur de tension comprenant un profilé (131), de préférence métallique, ancré sur l'armature de traction (11), compris au moins en partie dans le volume de contact (12) et configuré pour se déformer sous l'action des forces longitudinales (100) appliquées à la courroie de transmission (1) en fonctionnement, de sorte à mesurer les tensions longitudinales dans la courroie de transmission (1).

2. Courroie de transmission (1) selon la revendication précédente, dans laquelle le capteur de tension (13) comprend en outre au moins un transducteur (132) configuré pour convertir la déformation du profilé (131) en un signal électrique.

3. Courroie de transmission (1) selon l'une quelconque des revendications précédentes, dans laquelle le profilé (131) comprend une plaque (1311), de préférence en acier, possédant des propriétés de mémoire de forme et suffisamment souple pour se déformer sous l'action des forces longitudinales (100) appliquées à la courroie de transmission (1) en fonctionnement.

4. Courroie de transmission (1) selon les deux revendications précédentes, dans laquelle ledit au moins un transducteur (132) est disposé sur une des faces, de préférence sur chaque face, de la plaque d'acier (1311).

5. Courroie de transmission (1) selon l'une quelconque des revendications précédentes, dans laquelle le profilé (131) présente une coupe longitudinale en forme de U dont les pattes sont recourbées vers l'intérieur.

6. Courroie de transmission (1) selon la revendication précédente, dans laquelle le profilé (131) est intégré longitudinalement dans la courroie de transmission (1).

7. Courroie de transmission (1) selon l'une quelconque des revendications précédentes, dans laquelle le profilé (131) est caractérisé au moins par une longueur nominale $D$, une épaisseur e, et des pattes d'une hauteur $h$.

8. Courroie de transmission (1) selon la revendication précédente, dans laquelle le rapport $e/2h$ est sensiblement compris entre 1/50 et 1/150, et par exemple sensiblement égal à 1/100.

9. Courroie de transmission (1) selon l'une des deux revendications précédentes, dans laquelle les dimensions utiles $D$, e et $h$ du profilé (131) sont déterminées en fonction :

   • d'une amplitude des forces longitudinales (100) à mesurer, et/ou
   • d'une déformation maximale admissible de la courroie de transmission (1), et/ou
   • de l'élasticité du caoutchouc constituant le volume de contact (12), et/ou
   • des caractéristiques d'au moins un transducteur (132), et/ou
   • d'un diamètre minimum d'une poulie (2 et/ou 3), et/ou
   • de caractéristiques d'élasticité du profilé (131).

10. Courroie de transmission (1) selon l'une quelconque des revendications précédentes, dans laquelle l'ancrage du profilé mécanique (131) sur l'armature de traction (11) est réalisé par l'intermédiaire de portions recourbées (1312) du profilé (131), de préférence l'ancrage (1310) du profilé mécanique (131) sur l'armature de traction (11) comprend des griffes métalliques (1313) enfichées dans une nappe de fils de l'armature de traction (11).

11. Courroie de transmission (1) selon l'une quelconque des revendications précédentes, dans laquelle le capteur de tension (13) est intégré dans un boîtier (133) dont les dimensions sont liées aux limites de déformation maximale du profilé (131), de préférence le boîter (133) est à base d'un matériau résistant aux contraintes de température et d'abrasion dans la courroie de transmission (1).

12. Courroie de transmission (1) selon l'une quelconque des revendications précédentes, comprenant en outre un dispositif de conditionnement (134) du signal électrique issu de chaque transducteur (132).

13. Courroie de transmission (1) selon la revendication précédente, dans laquelle le dispositif de conditionnement (134) comprend :

   • un pont de Wheastone (1341) dont les deux branches sont les transducteurs (132) placées sur les faces déformables de la lame (1311) et/ou une jauge de température (1321) disposée sur le boitier de protection (133), et
- un convertisseur analogique-numérique (1342).

**14.** Courroie de transmission (1) selon l'une quelconque des deux revendications précédentes, comprenant en outre une antenne (135) pour émettre vers un récepteur extérieur (4) le signal issu du dispositif de conditionnement (134).

**15.** Machine (0) comprenant une poulie motrice (2), au moins une poulie réceptrice (3) et une ou plusieurs courroies de transmission (1) de couple selon l'une quelconque des revendications précédentes.

FIG. 1

FIG. 2

FIG. 3

FIG. 4

FIG. 5A

FIG. 5B

FIG. 5C

FIG. 5D

FIG. 5E

FIG. 6

FIG. 7

FIG. 8

FIG. 9A

FIG. 9B

FIG. 10

Europäisches
Patentamt

European
Patent Office

Office européen
des brevets

**RAPPORT DE RECHERCHE EUROPEENNE**

**Numéro de la demande**

**EP 25 22 1478**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 3 734 110 B1 (MITSUBOSHI BELTING LTD [JP]) 17 avril 2024 (2024-04-17) * Figure 1 et 3, ainsi que le texte correspondant dans la description. * ----- | 1-15 | INV. G01L5/102 G01M13/023 |
| A | WO 2012/085338 A1 (METSO FABRICS INC [FI]; ENQVIST RAUNO [FI] ET AL.) 28 juin 2012 (2012-06-28) * le document en entier * ----- | 1-15 | |
| A | US 7 494 004 B2 (SIEMENS ENERGY & AUTOMAT [US]) 24 février 2009 (2009-02-24) * le document en entier * ----- | 1-15 | |

**DOMAINES TECHNIQUES RECHERCHES (IPC)**

G01L
G01M
F16G

Le présent rapport a été établi pour toutes les revendications

| Lieu de la recherche | Date d'achèvement de la recherche | Examinateur |
|---|---|---|
| La Haye | 2 avril 2026 | Oppo, Carla Ivana |

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 25 22 1478

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

02-04-2026

| Document brevet cité au rapport de recherche | Date de publication | Membre(s) de la famille de brevet(s) | Date de publication |
|---|---|---|---|
| EP 3734110 B1 | 17-04-2024 | EP 3734110 A1<br>JP 6629949 B2<br>JP 2019108979 A<br>US 2021172497 A1 | 04-11-2020<br>15-01-2020<br>04-07-2019<br>10-06-2021 |
| WO 2012085338 A1 | 28-06-2012 | AUCUN | |
| US 7494004 B2 | 24-02-2009 | AUCUN | |

EPO FORM P0460

Pour tout renseignement concernant cette annexe : voir Journal Officiel de l'Office européen des brevets, No.12/82

**RÉFÉRENCES CITÉES DANS LA DESCRIPTION**

**Documents brevets cités dans la description**

- WO 2012085338 A1
- US 7494004 B2

- EP 3919775 A1